# FASCICULE DE BREVET EUROPEEN

(11) **EP 2 384 676 B1**
(45) Date de publication et mention de la délivrance du brevet: **05.03.2014**
(21) Numéro de dépôt: 11305539.6
(22) Date de dépôt: 06.05.2011
(51) Int. Cl.: A47J 43/07

(54) **Appareil electromenager de preparation culinaire verrouillable avec dispositif de securite**
Mit einer Sicherheitsvorrichtung verschließbares Elektro-Haushaltsgerät zur Essenszubereitung
Kitchen appliance suitable for being locked with a safety device

(30) Priorité: 07.05.2010 FR 1053597
(43) Date de publication de la demande: 09.11.2011
(73) Titulaire: Seb S.A., 69130 Ecully (FR)
(72) Inventeur: Garnier, Mikael, 65100, LOURDES (FR); Largueze, Mathieu, 65000, TARBES (FR)
(74) Mandataire: Cémeli, Eric Philippe Laurent

(56) Documents cités:
- FR-A1- 2 756 477

## Description

La présente invention concerne le domaine technique des appareils électroménagers de préparation culinaire comportant un outil de travail rotatif agencé dans un récipient de travail et un boîtier motorisé supérieur monté sur le récipient de travail.

La présente invention concerne plus particulièrement les appareils du type précité dans lesquels le boîtier motorisé supérieur est verrouillé sur le récipient de travail et comporte un dispositif de sécurité prévu pour détecter la présence du récipient de travail et d'une coupelle interposée entre le boîtier motorisé supérieur et le récipient de travail.

Le document WO 98/24350 divulgue un appareil comportant un boîtier motorisé supérieur verrouillé sur une coupelle au moyen d'une pièce mobile déplacée par un bouton de commande, la coupelle comportant une paroi d'obturation verrouillée par baionnette sur le récipient de travail au moyen d'une autre pièce mobile. Ces dispositions permettent d'obtenir un appareil dans lequel le boîtier motorisé supérieur est rendu solidaire du récipient de travail. Toutefois la construction proposée est onéreuse et présente l'inconvénient de comporter une coupelle présentant une pièce mobile de sécurité.

Un objet de la présente invention est de proposer un appareil de préparation culinaire comportant un boîtier motorisé supérieur verrouillé sur un récipient de travail et un dispositif de sécurité, qui présente une construction simplifiée.

Un autre objet de la présente invention est de proposer un appareil de préparation culinaire comportant un boîtier motorisé supérieur verrouillé sur un récipient de travail et un dispositif de sécurité, qui présente une utilisation facilitée.

Ces objets sont atteints avec un appareil électroménager de préparation culinaire, comportant un boîtier motorisé supérieur disposé sur un récipient de travail logeant une coupelle, le boîtier motorisé supérieur portant un élément de sécurité mobile entre une position de repos n'autorisant pas le fonctionnement de l'appareil et une position active autorisant le fonctionnement de l'appareil, du fait que la coupelle en place sous le boîtier motorisé supérieur repousse l'élément de sécurité vers une position intermédiaire n'autorisant pas le fonctionnement de l'appareil, que le boîtier motorisé supérieur est verrouillé par rotation sur le récipient de travail portant la coupelle, et que le récipient de travail présente une surface de came apte à repousser l'élément de sécurité de la position intermédiaire vers la position active lors du verrouillage par rotation du boîtier motorisé supérieur sur le récipient de travail portant la coupelle. Ainsi l'élément de sécurité détecte directement la présence du récipient de travail et de la coupelle. Le déplacement de l'élément de sécurité de la position de repos à la position active comporte une première partie effectuée par la coupelle, permettant d'atteindre une position intermédiaire de l'élément de sécurité, et une deuxième partie effectuée par le récipient de travail, à partir de la position intermédiaire de l'élément de sécurité. La surface de came du récipient de travail permet d'utiliser des directions différentes pour le mouvement de mise en place de la coupelle et pour le mouvement de verrouillage du récipient de travail avec le boîtier motorisé supérieur. L'appareil présente à la fois une utilisation simple et sûre.

Selon un mode de réalisation avantageux, le boîtier motorisé supérieur est verrouillé par baïonnette sur le récipient de travail. Cette disposition permet de limiter la rotation du boîtier motorisé supérieur par rapport au récipient de travail pour réaliser le verrouillage de l'appareil. En alternative, le boîtier motorisé supérieur pourrait notamment être vissé sur le récipient de travail.

Avantageusement, le récipient de travail comporte des organes de verrouillage s'étendant à l'intérieur dudit récipient de travail. Cette disposition permet de réduire l'encombrement de l'appareil, la partie inférieure du boîtier motorisé supérieur pouvant être insérée dans le récipient de travail.

Avantageusement, l'élément de sécurité comporte un organe de détection monté dans une ouverture d'une paroi inférieure du boîtier motorisé supérieur et la coupelle en place sous le boîtier motorisé supérieur repousse l'organe de détection vers l'intérieur du boîtier motorisé supérieur. Ainsi le boîtier motorisé supérieur peut être simplement posé sur la coupelle en place dans le récipient de travail, pour amener l'élément de sécurité en position intermédiaire.

Avantageusement alors, l'organe de détection est proéminent à l'intérieur d'une cavité de ladite paroi inférieure lorsque l'élément de sécurité occupe la position de repos. Cette disposition permet de rendre plus difficile l'actionnement de l'organe de détection par l'utilisateur.

Avantageusement alors, la coupelle présente une face supérieure comportant une zone annulaire de détection agencée en regard de l'organe de détection, ladite zone annulaire de détection présentant une géométrie de révolution. Cette disposition permet de mettre en place la coupelle dans le récipient de travail, sans orientation particulière. L'utilisation de l'appareil est ainsi facilitée.

Avantageusement alors, la zone annulaire de détection est formée par une nervure supérieure annulaire de la coupelle. Cette disposition permet de réduire la taille de l'élément de sécurité.

Avantageusement encore, la surface de came est formée par un organe de commande en biseau présentant une surface inférieure prévue pour coopérer avec une surface d'appui du boîtier motorisé supérieur et une surface supérieure prévue pour repousser l'élément de sécurité vers la position active lors de la rotation du récipient de travail par rapport au boîtier motorisé supérieur pour verrouiller le boîtier motorisé supérieur sur le récipient de travail portant la coupelle. La surface inférieure de l'organe de commande permet ainsi de verrouiller le boîtier motorisé supérieur sur le récipient de travail, la surface supérieure de l'organe de commande déplaçant l'élément de sécurité vers la position active de fonctionnement de l'appareil. La surface inférieure et/ou la surface supérieure peuvent être inclinées par rapport au plan de rotation du boîtier motorisé supérieur sur le récipient de travail.

Avantageusement alors, l'élément de sécurité présente un organe de blocage entravant la course de l'organe de commande lors du verrouillage du boîtier motorisé supérieur sur le récipient de travail en l'absence de la coupelle. Cette disposition permet d'éviter le verrouillage du boîtier motorisé supérieur sur le récipient de travail en l'absence de la coupelle. L'utilisateur essayant de verrouiller l'appareil pour le faire fonctionner est ainsi informé que l'appareil n'est pas utilisé dans une configuration conforme. En alternative, l'élément de sécurité pourrait présenter un organe de blocage entravant la course d'une autre partie du récipient de travail.

Avantageusement encore, le récipient de travail présente une zone d'appui annulaire interne prévue pour recevoir la coupelle. Cette disposition permet d'assurer une étanchéité relative entre le récipient de travail et la coupelle au niveau de ladite zone d'appui annulaire.

Selon une forme de réalisation, le boîtier motorisé supérieur comporte un interrupteur commandant le fonctionnement de l'appareil et un bouton de commande mobile entre une position arrêt dans laquelle l'interrupteur n'autorise pas le fonctionnement de l'appareil et une position marche dans laquelle l'interrupteur autorise le fonctionnement de l'appareil lorsque l'élément de sécurité occupe la position active.

Avantageusement alors, l'interrupteur est monté sur un support mobile susceptible d'être déplacé par le bouton de commande entre une position relevée dans laquelle l'interrupteur n'autorise pas le fonctionnement de l'appareil et une position abaissée dans laquelle l'interrupteur autorise le fonctionnement de l'appareil lorsque l'élément de sécurité occupe la position active.

L'invention sera mieux comprise à l'étude d'un exemple de réalisation, pris à titre nullement limitatif, illustré dans les figures annexées, dans lesquelles :
- la figure 1 est une vue en perspective éclatée d'un exemple de réalisation d'un appareil électroménager de préparation culinaire selon l'invention,
- la figure 2 est une vue de dessus en perspective du récipient de travail de l'appareil illustré sur la figure 1.
- la figure 3 est une vue de dessus en perspective de la coupelle de l'appareil illustré sur la figure 1,
- la figure 4 est une vue latérale en perspective montrant la coupelle illustrée sur la figure 3 en place dans le récipient illustré sur la figure 2,
- la figure 5 est une vue de côté en perspective de l'intérieur du boîtier motorisé supérieur de l'appareil illustré sur la figure 1,
- la figure 6 est une vue de dessous du boîtier motorisé supérieur de l'appareil illustré sur la figure 1,
- la figure 7 est une vue de côté en perspective du dispositif de sécurité et de la coupelle de l'appareil illustré sur la figure 1,
- la figure 8 est une vue partielle de côté en perspective de l'intérieur du récipient de travail illustré sur les figures 1, 2 et 4,
- la figure 9 est une vue de côté en perspective de l'élément de sécurité du dispositif de sécurité illustré sur la figure 7,
- la figure 10 est une vue de dessus en perspective du montage de l'élément de sécurité illustré sur la figure 9 dans le boîtier motorisé supérieur de l'appareil illustré sur la figure 1,
- la figure 11 est une vue de côté du boîtier motorisé supérieur illustrant la position de repos de l'élément de sécurité en l'absence de la coupelle,
- la figure 12 est une vue de côté du boîtier motorisé supérieur illustrant la position intermédiaire de l'élément de sécurité lorsque la coupelle (non représentée) est en place sous le boîtier motorisé supérieur,
- la figure 13 est une vue de côté du boîtier motorisé supérieur illustrant la position active de l'élément de sécurité lorsque le boîtier motorisé supérieur est verrouillé sur le récipient de travail (non représenté) portant la coupelle (non représentée).

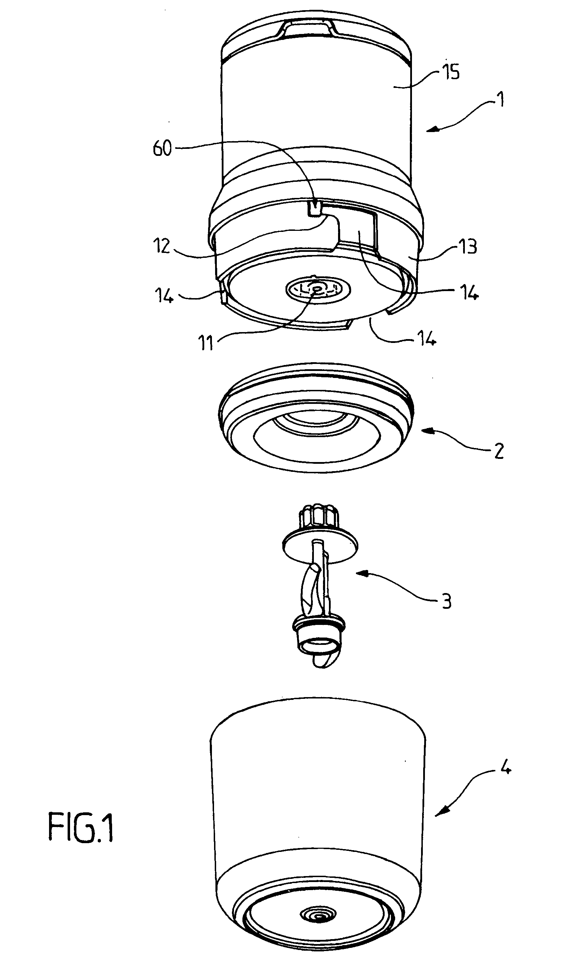

L'appareil électroménager de préparation culinaire illustré sur les figures 1 à 13 comporte un boîtier motorisé supérieur 1, une coupelle 2, un outil de travail rotatif 3 et un récipient de travail 4.

Le boîtier motorisé supérieur 1 est disposé sur le récipient de travail 4. Le récipient de travail 4 porte le boîtier motorisé supérieur 1.

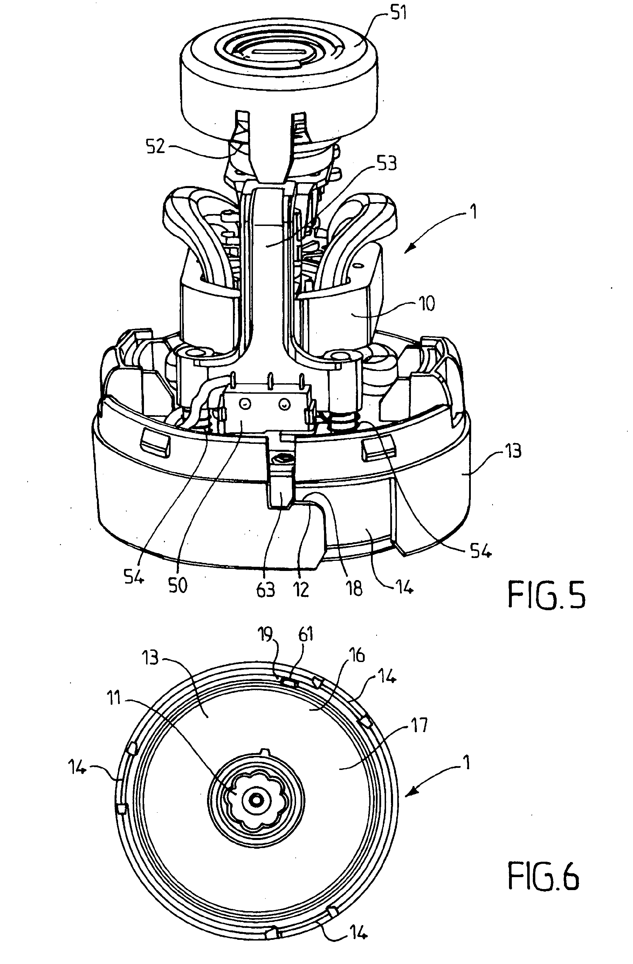

Le boîtier motorisé supérieur 1 loge un moteur 10 (visible sur la figure 5) prévu pour entraîner l'outil de travail rotatif 3 agencé dans le récipient de travail 4. A cet effet, le moteur 10 est relié à un organe entraîneur 11 agencé du côté inférieur du boîtier motorisé supérieur 1. Le boîtier motorisé supérieur 1 est verrouillé par rotation sur le récipient de travail 4 portant la coupelle 2. A cet effet, le récipient de travail 4 comporte des organes de verrouillage 40 prévus pour coopérer avec des organes de retenue 12 appartenant au boîtier motorisé supérieur 1.

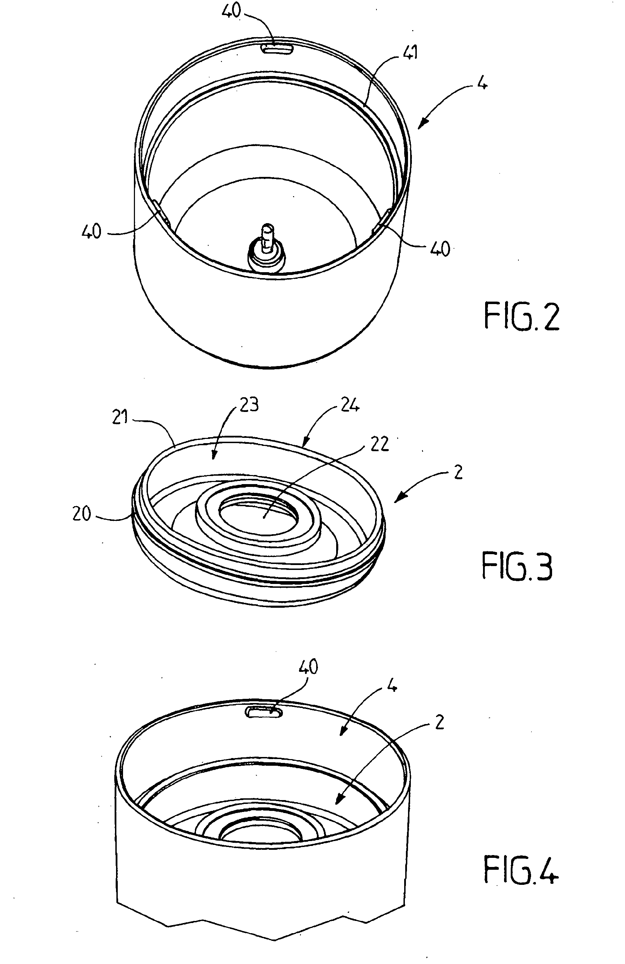

Tel que représenté sur les figures, le boîtier motorisé supérieur 1 est verrouillé par baïonnette sur le récipient de travail 4. Tel que visible sur la figure 2, le récipient de travail 4 comporte trois organes de verrouillage 40 ; le boîtier motorisé supérieur 1 comporte trois organes de retenue 12 prévus pour retenir les organes de verrouillage 40.

Plus particulièrement, le boîtier motorisé supérieur 1 présente une partie inférieure 13 prévue pour être insérée dans le récipient de travail 4. Les organes de verrouillage 40 s'étendent à l'intérieur du récipient de travail 4. Les organes de retenue 12 sont agencés à l'extérieur de la partie inférieure 13 du boîtier motorisé supérieur 1. A cet effet, la partie inférieure 13 présente trois échancrures latérales 14 en L inversé logeant les organes de retenue 12, les échancrures latérales 14 étant prévues pour recevoir les organes de verrouillage 40.

Le récipient de travail 4 loge la coupelle 2. Tel que visible sur la figure 2, le récipient de travail 4 présente une zone d'appui annulaire interne 41 prévue pour recevoir la coupelle 2. Tel que visible sur la figure 4, la coupelle 2 est agencée dans le récipient de travail 4. La coupelle 2 repose sur la zone d'appui annulaire interne 41. Tel que visible sur la figure 3, la coupelle 2 présente un bord périphérique 20 prévu pour reposer sur la zone d'appui annulaire interne 41. Le bord périphérique 20 est agencé sur une nervure supérieure annulaire 21 de la coupelle 2. La coupelle 2 présente une ouverture centrale 22 prévue pour le passage de la partie supérieure de l'outil de travail rotatif 3. Le récipient de travail 4 loge l'outil de travail rotatif 3.

Le boîtier motorisé supérieur 1 comporte un corps principal 15, monté sur la partie inférieure 13, le corps principal 15 étant visible sur la figure 1 mais n'étant pas représenté sur la figure 5. Le boîtier motorisé supérieur 1 comporte un interrupteur 50 commandant le fonctionnement de l'appareil. Le boîtier motorisé supérieur 1 comporte un bouton de commande 51, visible sur la figure 5. Le bouton de commande 51 est porté par le corps principal 15. Le bouton de commande 51 est monté mobile contre un organe de rappel élastique 52. L'organe de rappel élastique 52 repose par exemple sur le moteur 10. Le bouton de commande 51 est susceptible de déplacer un support mobile 53 portant l'interrupteur 50. Le support mobile 53 est monté mobile contre des moyens de rappel élastique 54. Les moyens de rappel élastique 54 reposent par exemple sur la partie inférieure 13.

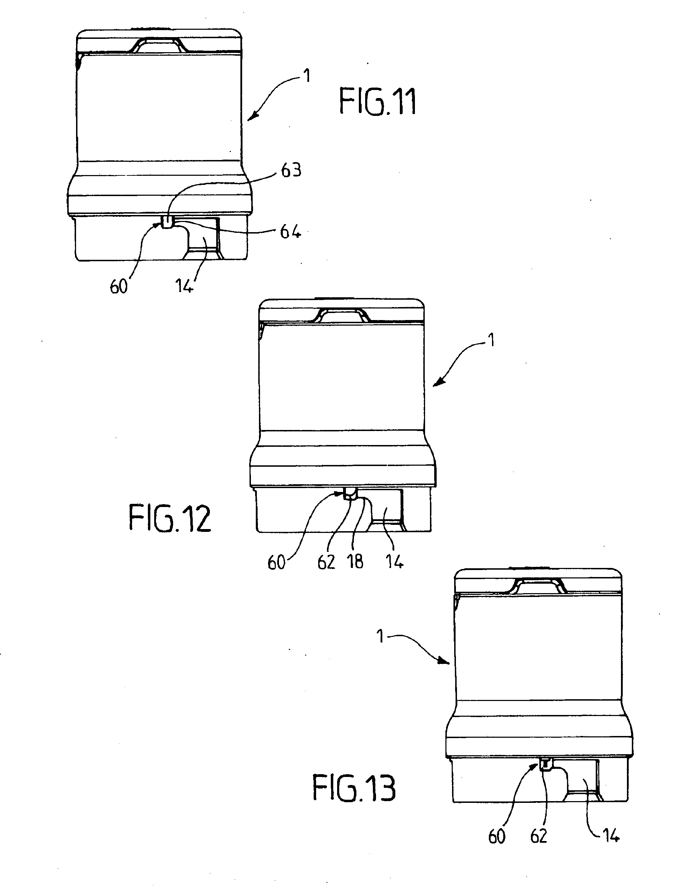

Le boîtier motorisé supérieur 1 porte un élément de sécurité 60 mobile entre une position de repos n'autorisant pas le fonctionnement de l'appareil, illustrée sur la figure 11, et une position active autorisant le fonctionnement de l'appareil, illustrée sur la figure 13. La coupelle 2 en place sous le boîtier motorisé supérieur 1 repousse l'élément de sécurité 60 vers une position intermédiaire n'autorisant pas le fonctionnement de l'appareil. La position intermédiaire de l'élément de sécurité 60 est illustrée sur la figure 12.

Le bouton de commande 51 est mobile entre une position arrêt dans laquelle l'interrupteur 50 n'autorise pas le fonctionnement de l'appareil et une position marche dans laquelle l'interrupteur 50 autorise le fonctionnement de l'appareil lorsque l'élément de sécurité 60 occupe la position active.

L'interrupteur 50 est monté sur le support mobile 53 susceptible d'être déplacé par le bouton de commande 51 entre une position relevée dans laquelle l'interrupteur 50 n'autorise pas le fonctionnement de l'appareil et une position abaissée dans laquelle l'interrupteur 50 autorise le fonctionnement de l'appareil lorsque l'élément de sécurité 60 occupe la position active.

L'élément de sécurité 60 comporte un organe de détection 61 prévu pour coopérer avec la coupelle 2. Tel que visible sur la figure 6, l'organe de détection 61 est monté dans une ouverture 16 d'une paroi inférieure 17 du boîtier motorisé supérieur 1. L'organe de détection 61 est proéminent à l'intérieur d'une cavité 19 de ladite paroi inférieure 17 lorsque l'élément de sécurité 60 occupe la position de repos. La coupelle 2 en place sous le boîtier motorisé supérieur 1 repousse l'organe de détection 61 vers l'intérieur du boîtier motorisé supérieur 1.

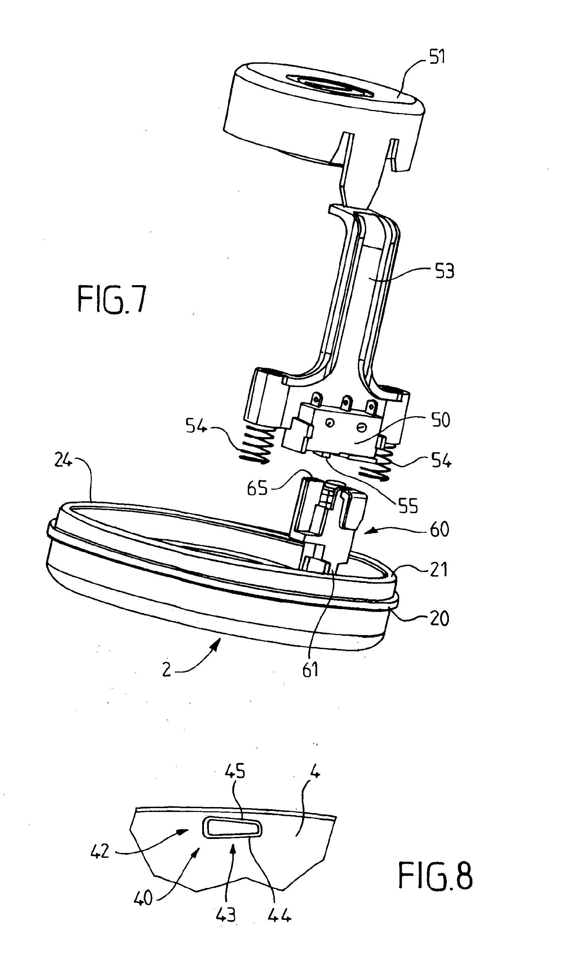

La coupelle 2 présente une face supérieure 23 visible sur la figure 3. La face supérieure 23 de la coupelle 2 comporte une zone annulaire de détection 24 agencée en regard de l'organe de détection 61, lorsque la coupelle 2 est en place sous l'élément de sécurité 60, tel que représenté sur la figure 7. La zone annulaire de détection 24 présente une géométrie de révolution, permettant une mise en place de la coupelle 2 sous le boîtier motorisé supérieur 1 sans indexation angulaire particulière. Plus particulièrement, la zone annulaire de détection 24 est formée par la nervure supérieure annulaire 21 de la coupelle 2. La cavité 19 est formée par une gorge annulaire.

Le récipient de travail 4 présente une surface de came 42 apte à repousser l'élément de sécurité 60 de la position intermédiaire vers la position active lors du verrouillage par rotation du boîtier motorisé supérieur 1 sur le récipient de travail 4 portant la coupelle 2. Tel que visible sur la figure 8, la surface de came 42 est formée par un organe de commande 43 en biseau présentant une surface inférieure 44 et une surface supérieure 45.

La surface inférieure 44 est prévue pour coopérer avec une surface d'appui 18 du boîtier motorisé supérieur 1. Plus particulièrement, l'organe de commande 43 correspond à l'un des organes de verrouillage 40, et la surface d'appui 18 correspond à l'organe de retenue 12 adjacent à l'élément de sécurité 60.

La surface supérieure 45 est prévue pour repousser l'élément de sécurité 60 vers la position active lors de la rotation du récipient de travail 4 par rapport au boîtier motorisé supérieur 1 pour verrouiller le boîtier motorisé supérieur 1 sur le récipient de travail 4 portant la coupelle 2. La surface supérieure 45 repousse un deuxième organe de détection 62 de l'élément de sécurité 60. Plus particulièrement, le deuxième organe de détection 62 est formé par l'extrémité inférieure d'une languette 63 agencée dans l'une des échancrures latérales 14 de la partie inférieure 13 du boîtier motorisé supérieur 1.

L'élément de sécurité 60 présente un organe de blocage 64 entravant la course de l'organe de commande 43 lors du verrouillage du boîtier motorisé supérieur 1 sur le récipient de travail 4 en l'absence de la coupelle 2, lorsque l'élément de sécurité 60 occupe la position de repos. Plus particulièrement, l'organe de blocage 64 est formé par une face latérale de la languette 63 agencée dans l'une des échancrures latérales 14 de la partie inférieure 13 du boîtier motorisé supérieur 1.Tel que visible sur la figure 12, l'organe de blocage 64 occupe le fond de l'échancrure 14 au-delà de la surface d'appui 18.

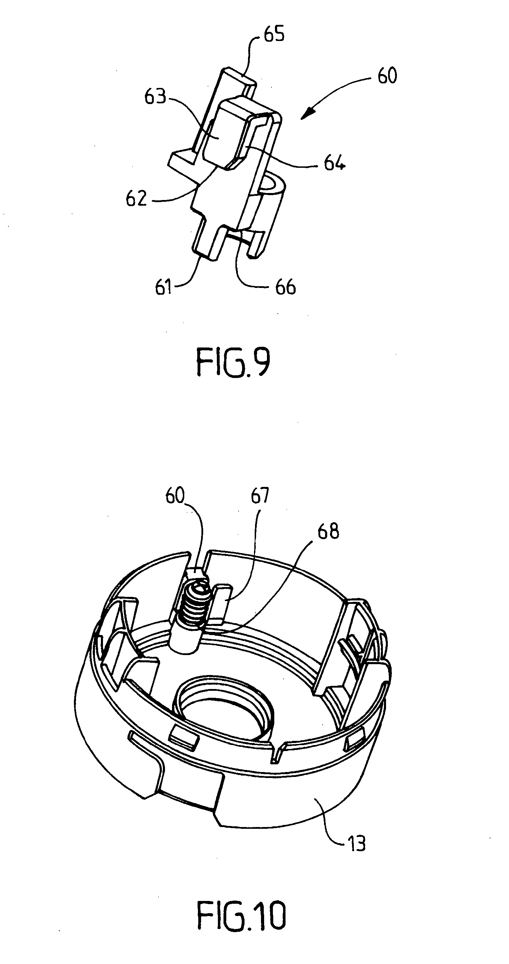

Tel que montré sur la figure 9, l'élément de sécurité 60 présente une surface d'actionnement 65 supérieure. La surface d'actionnement 65 est prévue pour actionner un bouton d'actionnement 55 de l'interrupteur 50, tel que visible sur la figure 7. L'élément de sécurité 60 présente un organe de guidage 66 prévu pour un déplacement en translation de l'élément de sécurité 60 par rapport au boîtier motorisé supérieur 1. Tel que montré sur la figure 10, l'élément de sécurité 60 est monté mobile contre un dispositif de rappel élastique 67 comportant un ressort hélicoïdal maintenu par une vis 68.

L'appareil selon l'invention s'utilise et fonctionne de la manière suivante.

L'utilisateur met en place la coupelle 2 dans le récipient de travail 4, puis dispose le boîtier motorisé supérieur 1 sur le récipient de travail 4 en introduisant les organes de verrouillage 40 du récipient de travail 4 dans les échancrures latérales 14 du boîtier motorisé supérieur 1. La nervure supérieure annulaire 21 de la coupelle 2 repousse l'organe de détection 61 de l'élément de sécurité 60. L'élément de sécurité 60 est alors déplacé de la position de repos illustré sur la figure 11 à la position intermédiaire illustrée sur la figure 12.

L'organe de verrouillage 40 formant la surface de came 42 peut alors être inséré sous le deuxième organe de détection 62 de l'élément de sécurité 60. L'utilisateur peut ainsi tourner le boîtier motorisé supérieur 1 par rapport au récipient de travail 4. Les organes de verrouillage 40 engagés dans les échancrures latérales 14 prennent appui sur les organes de retenue 12 et verrouillent le boîtier motorisé supérieur 1 sur le récipient de travail 4. La surface de came 42 prenant appui sur la surface d'appui 18 du boîtier motorisé supérieur 1 soulève le deuxième organe de détection 62 de l'élément de sécurité 60. L'élément de sécurité 60 est alors déplacé de la position intermédiaire illustrée sur la figure 12 à la position active illustrée sur la figure 13.

L'appareil peut alors fonctionner si l'utilisateur appuie sur le bouton de commande 51. Le déplacement du support mobile 53 portant l'interrupteur 50 vers la position marche amène le bouton d'actionnement 55 de l'interrupteur 50 au contact de la surface d'actionnement 65 de l'élément de sécurité 60 en position active.

L'appareil proposé présente ainsi une utilisation aisée et une construction relativement simple. L'utilisation de la coupelle 2 pour réaliser la première partie du déplacement de l'élément de sécurité 60 et du récipient de travail 4 pour réaliser la deuxième partie du déplacement de l'élément de sécurité 60 rend l'appareil particulièrement sûr.

A titre de variante, l'outil de travail rotatif 3 n'est pas nécessairement monté sur le fond du récipient de travail 4, mais pourrait notamment être monté suspendu sous le boîtier motorisé supérieur 1.

A titre de variante, l'organe de commande 43 pourrait être distinct des organes de verrrouillage 40.

A titre de variante, le boîtier motorisé supérieur 1 pourrait être dépourvu de bouton de commande 51, l'interrupteur 50 étant agencé dans le boîtier motorisé supérieur 1 dans une position correspondant à la position marche précitée, le verrouillage du boîtier motorisé supérieur 1 sur le récipient de travail 4 portant la coupelle 2 amenant alors la surface d'actionnement 65 de l'élément de sécurité 60 en position active au contact du bouton d'actionnement 55 de l'interrupteur 50.

A titre de variante, le boîtier motorisé supérieur 1 pourrait être verrouillé par vissage sur le récipient de travail 4.

La présente invention n'est nullement limitée à l'exemple de réalisation décrit et à ses variantes, mais englobe de nombreuses modifications dans le cadre des revendications.

## Revendications

1. Appareil électroménager de préparation culinaire, comportant un boîtier motorisé supérieur (1) disposé sur un récipient de travail (4) logeant une coupelle (2), le boîtier motorisé supérieur (1) portant un élément de sécurité (60) mobile entre une position de repos n'autorisant pas le fonctionnement de l'appareil et une position active autorisant le fonctionnement de l'appareil, **caractérisé en ce que** la coupelle (2) en place sous le boîtier motorisé supérieur (1) repousse l'élément de sécurité (60) vers une position intermédiaire n'autorisant pas le fonctionnement de l'appareil, **en ce que** le boîtier motorisé supérieur (1) est verrouillé par rotation sur le récipient de travail (4) portant la coupelle (2), et **en ce que** le récipient de travail (4) présente une surface de came (42) apte à repousser l'élément de sécurité (60) de la position intermédiaire vers la position active lors du verrouillage par rotation du boîtier motorisé supérieur (1) sur le récipient de travail (4) portant la coupelle (2).

2. Appareil électroménager de préparation culinaire selon la revendication 1, **caractérisé en ce que** le boîtier motorisé supérieur (1) est verrouillé par baïonnette sur le récipient de travail (4).

3. Appareil électroménager de préparation culinaire selon l'une des revendications 1 ou 2, **caractérisé en ce que** le récipient de travail (4) comporte des organes de verrouillage (40) s'étendant à l'intérieur dudit récipient de travail (4).

4. Appareil électroménager de préparation culinaire selon l'une des revendications 1 à 3, **caractérisé en ce que** l'élément de sécurité (60) comporte un organe de détection (61) monté dans une ouverture (16) d'une paroi inférieure (17) du boîtier motorisé supérieur (1) et **en ce que** la coupelle (2) en place sous le boîtier motorisé supérieur (1) repousse l'organe de détection (61) vers l'intérieur du boîtier motorisé supérieur (1).

5. Appareil électroménager de préparation culinaire selon la revendication 4, **caractérisé en ce que** l'organe de détection (61) est proéminent à l'intérieur d'une cavité (19) de ladite paroi inférieure (17) lorsque l'élément de sécurité (60) occupe la position de repos.

6. Appareil électroménager de préparation culinaire selon l'une des revendications 4 ou 5, **caractérisé en ce que** la coupelle (2) présente une face supérieure (23) comportant une zone annulaire de détection (24) agencée en regard de l'organe de détection (61), ladite zone annulaire de détection (24) présentant une géométrie de révolution.

7. Appareil électroménager de préparation culinaire selon la revendication 6, **caractérisé en ce que** la zone annulaire de détection (24) est formée par une nervure supérieure annulaire (21) de la coupelle (2).

8. Appareil électroménager de préparation culinaire selon l'une des revendications 1 à 7, **caractérisé en ce que** la surface de came (42) est formée par un organe de commande (43) en biseau présentant une surface inférieure (44) prévue pour coopérer avec une surface d'appui (18) du boîtier motorisé supérieur (1) et une surface supérieure (45) prévue pour repousser l'élément de sécurité (60) vers la position active lors de la rotation du récipient de travail (4) par rapport au boîtier motorisé supérieur (1) pour verrouiller le boîtier motorisé supérieur (1) sur le récipient de travail (4) portant la coupelle (2).

9. Appareil électroménager de préparation culinaire selon la revendication 8, **caractérisé en ce que** l'élément de sécurité (60) présente un organe de blocage (64) entravant la course de l'organe de commande (43) lors du verrouillage du boîtier motorisé supérieur (1) sur le récipient de travail (4) en l'absence de la coupelle (2).

10. Appareil électroménager de préparation culinaire selon l'une des revendications 1 à 9, **caractérisé en ce que** le récipient de travail (4) présente une zone d'appui annulaire interne (41) prévue pour recevoir la coupelle (2).

11. Appareil électroménager de préparation culinaire selon l'une des revendications 1 à 10, **caractérisé en ce que** le boîtier motorisé supérieur (1) comporte un interrupteur (50) commandant le fonctionnement de l'appareil et un bouton de commande (51) mobile entre une position arrêt dans laquelle l'interrupteur (50) n'autorise pas le fonctionnement de l'appareil et une position marche dans laquelle l'interrupteur (50) autorise le fonctionnement de l'appareil lorsque l'élément de sécurité (60) occupe la position active.

12. Appareil électroménager de préparation culinaire selon la revendication 11, **caractérisé en ce que** l'interrupteur (50) est monté sur un support mobile (53) susceptible d'être déplacé par le bouton de commande (51) entre une position relevée dans laquelle l'interrupteur (50) n'autorise pas le fonctionnement de l'appareil et une position abaissée dans laquelle l'interrupteur (50) autorise le fonctionnement de l'appareil lorsque l'élément de sécurité (60) occupe la position active.

## Patentansprüche

1. Elektrohaushaltsgerät für die Zubereitung von Speisen, mit einem oben befindlichen Gehäuse mit Motor (1), das auf einem Arbeitsbehälter (4) sitzt, auf dem sich eine Manschette (2) befindet, wobei das oben befindliche Gehäuse mit Motor (1) mit einem Sicherungselement (60) versehen ist, das zwischen einer Ruhestellung, bei der kein Betrieb des Geräts möglich ist, und einer Aktivierungsstellung, bei der der Betrieb des Geräts möglich ist, zu bewegen ist, **dadurch gekennzeichnet, dass** die Manschette (2), die sich unter dem oberen Gehäuse mit Motor (1) befindet, das Sicherungselement (60) in eine Zwischenstellung verschiebt, bei der kein Betrieb des Geräts möglich ist, dass das obere Gehäuse mit Motor (1) durch eine Drehung auf dem Arbeitsbehälter (4), auf dem die Manschette (2) sitzt, verriegelt wird, und dass der Arbeitsbehälter (4) eine Nockenfläche (42) aufweist, die das Sicherungselement (60) bei der Verriegelung durch Drehung des oberen Gehäuses mit Motor (1) auf dem Arbeitsbehälter (4), auf dem die Manschette (2) sitzt, aus der Zwischenstellung in die Aktivierungsstellung verschieben kann.

2. Elektrohaushaltsgerät für die Zubereitung von Speisen nach Anspruch 1, **dadurch gekennzeichnet, dass** der oben befindliche Motor (1) durch einen Bajonettriegel auf dem Arbeitsbehälter (4) verriegelt wird.

3. Elektrohaushaltsgerät für die Zubereitung von Speisen nach einem der Ansprüche 1 oder 2, **dadurch gekennzeichnet, dass** der Arbeitsbehälter (4) mit Verriegelungskörpern (40) versehen ist, die über den Innenraum des Arbeitsbehälters (4) verteilt sind.

4. Elektrohaushaltsgerät für die Zubereitung von Speisen nach einem der Ansprüche 1 bis 3, **dadurch gekennzeichnet, dass** das Sicherungselement (60) eine Erkennungsvorrichtung (61) aufweist, die in einer Öffnung (16) einer unteren Wand (17) des oberen Gehäuses mit Motor (1) montiert ist, und dass die Manschette (2), die sich unter dem oberen Gehäuse mit Motor (1) befindet, die Erkennungsvorrichtung (61) in den Innenraum des oberen Gehäuses mit Motor (1) verschiebt.

5. Elektrohaushaltsgerät für die Zubereitung von Speisen nach Anspruch 4, **dadurch gekennzeichnet, dass** die Erkennungsvorrichtung (61) aus einer Vertiefung (19) der unteren Wand (17) herausragt, wenn das Sicherungselement (60) sich in der Ruhestellung befindet.

6. Elektrohaushaltsgerät für die Zubereitung von Speisen nach einem der Ansprüche 4 oder 5, **dadurch gekennzeichnet, dass** die Manschette (2) eine obere Wand (23) aufweist, die mit einer ringförmigen Erkennungszone (24) versehen ist, welche gegenüber der Erkennungsvorrichtung (61) angebracht ist, wobei die ringförmige Erkennungszone (24) ein geometrisches Rotationskonzept aufweist.

7. Elektrohaushaltsgerät für die Zubereitung von Speisen nach Anspruch 6, **dadurch gekennzeichnet, dass** die ringförmige Erkennungszone (24) durch eine ringförmige obere Rippe (21) der Manschette (2) geformt wird.

8. Elektrohaushaltsgerät für die Zubereitung von Speisen nach einem der Ansprüche 1 bis 7, **dadurch gekennzeichnet, dass** die Nockenfläche (42) durch ein abgeschrägtes Betätigungsglied (43) geformt wird, das eine Innenfläche (44) aufweist, die dazu gedacht ist, mit der Auflagefläche (18) des oberen Gehäuses mit Motor (1) und einer Oberseite (45), die zum Verschieben des Sicherungselements (60) in die Aktivierungsstellung bei der Drehung des Arbeitsbehälters (4) entgegen dem oberen Gehäuse mit Motor (1) vorgesehen ist, zusammenzuwirken, um das obere Gehäuse mit Motor (1) auf dem Arbeitsbehälter (4) mit der Manschette (2) zu verriegeln.

9. Elektrohaushaltsgerät für die Zubereitung von Speisen nach Anspruch 8, **dadurch gekennzeichnet, dass** das Sicherungselement (60) einen Blockierkörper (64) aufweist, durch den der Lauf des Betätigungsglieds (43) bei der Verriegelung des oberen Gehäuses mit Motor (1) auf dem Arbeitsbehälter (4) ohne die Manschette (2) gehemmt wird.

10. Elektrohaushaltsgerät für die Zubereitung von Speisen nach einem der Ansprüche 1 bis 9, **dadurch gekennzeichnet, dass** der Arbeitsbehälter (4) einen inneren ringförmige Auflagerand (41) aufweist, der zur Aufnahme der Manschette (2) vorgesehen ist.

11. Elektrohaushaltsgerät für die Zubereitung von Speisen nach einem der Ansprüche 1 bis 10, **dadurch gekennzeichnet, dass** das obere Gehäuse mit Motor (1) eine Schaltung (50) aufweist, die den Betrieb des Geräts steuert, und eine Betätigungstaste (51), die sich zwischen einer Ausschaltstellung, bei der die Schaltung (50) keinen Betrieb des Geräts zulässt, und einer Einschaltstellung, bei der die Schaltung (50) den Betrieb des Geräts zulässt, wenn das Sicherungselement (60) sich in der Aktivierungsstellung befindet, bewegt.

12. Elektrohaushaltsgerät für die Zubereitung von Speisen nach Anspruch 11, **dadurch gekennzeichnet, dass** die Schaltung (50) an einer beweglichen Halterung (53) angebracht ist, die durch die Betätigungstaste (51) zwischen einer höheren Position, bei der die Schaltung (50) keinen Betrieb des Geräts zulässt, und einer tieferen Position, bei der die Schaltung (50) den Betrieb des Geräts zulässt, wenn das Sicherungselement (60) sich in der Aktivierungsstellung befindet, verstellt werden kann.

## Claims

1. Food preparation household electrical appliance comprising an upper motorised box (1) arranged on a working receptacle (4) housing a cup (2), the upper motorised box (1) having a safety element (60) movable between a rest position not allowing operation of the appliance and an active position allowing operation of the appliance, **characterised in that** the cup (2) in place under the upper motorised box (1) pushes back the safety element (60) to an intermediate position not allowing operation of the appliance, **in that** the upper motorised box (1) is locked by rotation on the working receptacle (4) supporting the cup (2), and **in that** the working receptacle (4) has a cam surface (42) capable of pushing back the safety element (60) from the intermediate position to the active position when the upper motorised box (1) is locked by rotation on the working receptacle (4) supporting the cup (2).

2. Food preparation household electrical appliance according to claim 1, **characterised in that** the upper motorised box (1) is locked by bayonet fitting on the working receptacle (4).

3. Food preparation household electrical appliance according to claim 1 or 2, **characterised in that** the working receptacle (4) comprises locking units (40) extending inside said working receptacle (4).

4. Food preparation household electrical appliance according to one of claims 1 to 3, **characterised in that** the safety element (60) comprises a detection unit (61) mounted in an opening (16) of a lower wall (17) of the upper motorised box (1) and **in that** the cup (2) in place under the upper motorised box (1) pushes back the detection unit (61) towards the inside of the upper motorised box (1).

5. Food preparation household electrical appliance according to claim 4, **characterised in that** the detection unit (61) protrudes inside a cavity (19) of said lower wall (17) when the safety element (60) is in the rest position.

6. Food preparation household electrical appliance according to claim 4 or 5, **characterised in that** the cup (2) has an upper face (23) having an annular area of detection (24) arranged opposite the detection unit (61), said annular area of detection (24) having a geometry of revolution.

7. Food preparation household electrical appliance according to claim 6, **characterised in that** the annular area of detection (24) is formed by an upper annular groove (21) of the cup (2).

8. Food preparation household electrical appliance according to one of claims 1 to 7, **characterised in that** the cam surface (42) is formed by a bevelled control unit (43) having a lower surface (44) adapted to cooperate with a bearing surface (18) of the upper motorised box (1) and an upper surface (45) designed to push back the safety element (60) to the active position during rotation of the working receptacle (4) relative to the upper motorised box (1) to lock the upper motorised box (1) on the working receptacle (4) supporting the cup (2).

9. Food preparation household electrical appliance according to claim 8, **characterised in that** the safety element (60) has a blocking unit (64) impeding the travel of the control unit (43) when locking the upper motorised box (1) on the working receptacle (4) in the absence of the cup (2).

10. Food preparation household electrical appliance according to one of claims 1 to 9, **characterised in that** the working receptacle (4) has an internal annular bearing area (41) for receiving the cup (2).

11. Food preparation household electrical appliance according to one of claims 1 to 10, **characterised in that** the upper motorised box (1) comprises a switch (50) controlling operation of the appliance and a control button (51) movable between an off position in which the switch (50) does not allow operation of the appliance and an on position in which the switch (50) allows operation of the appliance when the safety element (60) is in the active position.

12. Food preparation household electrical appliance according to claim 11, **characterised in that** the switch (50) is mounted on a movable support (53) that can be moved by the control button (51) between a raised position in which the switch (50) does not allow operation of the appliance and a lowered position in which the switch (50) allows operation of the appliance when the safety element (60) is in the active position.
